(19)

Europäisches Patentamt
European Patent Office
Office européen des brevets

(11)    **EP 2 673 594 B1**

(12)                    **EUROPÄISCHE PATENTSCHRIFT**

(45) Veröffentlichungstag und Bekanntmachung des Hinweises auf die Patenterteilung:
**03.02.2016  Patentblatt 2016/05**

(51) Int Cl.:
*G01D 5/20* (2006.01)          *G01L 3/10* (2006.01)
*G01P 3/44* (2006.01)

(21) Anmeldenummer: **11711019.7**

(22) Anmeldetag: **09.02.2011**

(86) Internationale Anmeldenummer:
**PCT/DE2011/000120**

(87) Internationale Veröffentlichungsnummer:
**WO 2012/107006 (16.08.2012 Gazette 2012/33)**

(54) **VERFAHREN ZUM ERFASSEN DES VERDREHWINKELS EINER WELLE UND/ODER EINES AN DER WELLE AUFTRETENDEN DREHMOMENTS UND VORRICHTUNG ZUR DURCHFÜHRUNG DES VERFAHRENS**

METHOD FOR DETECTING THE TORSION ANGLE OF A SHAFT AND/OR OF A TORQUE OCCURRING ON THE SHAFT AND DEVICE OF CARRYING OUT SAID METHOD

PROCÉDÉ D'ENREGISTREMENT DE L'ANGLE DE TORSION D'UN ARBRE ET/OU D'UN MOMENT DE ROTATION GÉNÉRÉ SUR L'ARBRE ET MISE EN ŒUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2013  Patentblatt 2013/51**

(73) Patentinhaber: **Balluff GmbH**
**73765 Neuhausen/Filder (DE)**

(72) Erfinder: **FRITTON, Markus**
**73765 Neuhausen (DE)**

(74) Vertreter: **Jakelski & Althoff**
**Patentanwälte**
**Partnerschaftsgesellschaft**
**Mollenbachstraße 37**
**71229 Leonberg (DE)**

(56) Entgegenhaltungen:
**WO-A1-01/75456          DE-A1- 4 014 756**
**US-A1- 2004 027 116**

**Beschreibung**

Die Erfindung geht aus von einem Verfahren zum Erfassen des Verdrehwinkels einer Welle und/oder eines an der Welle auftretenden Drehmoments sowie von einer Vorrichtung zur Durchführung des Verfahrens.

Gegenstand der vorliegenden Erfindung ist auch ein Computerprogramm zum Betreiben der Vorrichtung.

**Stand der Technik**

In der Patentschrift DE 198 18 799 C2 ist eine Vorrichtung zum Erfassen des Drehwinkels einer Welle beschrieben. Die Vorrichtung enthält einen magnetischen Maßstab sowie eine dem Maßstab zugeordnete Sensoreinheit. Der magnetische Maßstab weist zwei auf der Drehachse koaxial angeordnete magnetisch codierte Ringe auf. Die Anzahl der Magnetpole auf dem halben Umfang des einen Rings ist teilerfremd zu der Anzahl der Magnetpole auf dem halben Umfang des anderen Rings. Ein Ring weist weiterhin eine ungerade Anzahl von Polen auf. Die Sensoranordnung enthält zwei magnetoresistive Sensoren, welche das Magnetfeld der beiden Ringe erfassen und einen weiteren, als Hallsensor ausgebildeten Sensor, der das Magnetfeld des Rings mit der ungeraden Anzahl von Polen erfasst.

In der Offenlegungsschrift DE 199 32 965 A1 ist eine Positions-Messvorrichtung beschrieben, mit der das an einer Welle auftretende Drehmoment ermittelt wird. Der optische Sensor umfasst eine Skaleneinheit mit einer ersten Doppelskale aus einer ersten und einer zweiten in Umfangsrichtung der Welle angeordneten Strichskale. Die Überlagerung beider Strichskalen erzeugt ein vom Drehmoment abhängiges optisch detektierbares Moire-Muster. Ein optischer Sensor erfasst einen Teilbereich des Moire-Musters, das in einer Auswerteeinheit in ein Abbild einer Periode des Moire-Musters umgewandelt wird, dem bei stillstehender Welle der Nullpunkt des Drehmoments zugeordnet wird.

In der Patentschrift DE 602 01 226 T2 ist eine kapazitive Messvorrichtung beschrieben, mit der das an einer zweigeteilten, mit einem Torsionsstab verbundenen Welle auftretende Drehmoment gemessen wird. Vorgesehen ist eine dielektrische Scheibe, die eine Mehrzahl von Speichen aufweist und für eine Drehung mit der ersten Hälfte der Welle montiert ist. Vorhanden ist weiterhin ein aus einer ersten und einer zweiten, mit Öffnungen versehenen leitenden Scheibe gebildetes Paar, das die dielektrische Scheibe käfigartig einschließt und das für eine Drehung mit der Hälfte der Welle montiert ist, wobei der Käfig Abschnitte der Speichen der dielektrischen Scheibe im Verhältnis zu einem ausgeübten Drehmoment der Welle abdeckt. Ferner ist ein Paar konzentrischer Kondensator-Plattenringe vorgesehen, welche die erste Wellenhälfte umschließend in einer ersten mit Öffnungen versehenen leitenden Scheibe angeordnet sind. Weiterhin ist eine gegenüberliegende Kondensatorplatte vorgesehen, welche die zweite Wellenhälfte umschließt und neben der zweiten mit Öffnungen versehenen leitenden Scheibe angeordnet ist. Ferner sind elektrische Brückenmittel zum Vergleichen der zwischen dem Paar konzentrischer Ringe und der gegenüberliegenden Kondensatorplatte gebildeten Kapazitäten vorgesehen, um letztendlich das an der Welle auftretende Drehmoment zu bestimmen.

In der Patentschrift DE 697 32 355 T2 ist ein Verfahren zum Einbau eines Drehmomentsensors in Motoren oder Getrieben beschrieben, der im Wesentlichen konzentrisch in Verbindung mit einer rotierenden Welle eingebaut ist. Der Drehmomentsensor besteht aus mindestens einer stationären Spule und er weist mindestens eine Zone auf, die mit parallelen Leitungsbahnen aus leitfähigem Material ausgestattet ist. Die rotierende Welle ist als Kurbelwelle ausgebildet, die eine Ausnehmung aufweist, wobei die Zone auf einer äußeren Ummantelungsfläche einer Messfläche angeordnet ist, die in der Ausnehmung befestigt und von der stationären Spule eingeschlossen ist. Die bekannte Anordnung zeichnet sich dadurch aus, dass die Messwelle und die Ausnehmung jeweils mit einer Öffnung versehen sind und gemeinsam einen durch diese Öffnungen verlaufenden Bolzen beziehungsweise eine Schraube aufnehmen, um die Ausnehmung und die Messwelle zu verriegeln.

In der Offenlegungsschrift DE 10 2007 023 537 A1 ist eine Vorrichtung zum Messen von Dehnungen beschrieben, die insbesondere auch zum Messen von Drehmomenten geeignet ist. Anschlüsse, über welche die Drehmomente ein- beziehungsweise ausgeleitet werden, sind über Dehnungs-Messstrukturen miteinander verbunden, die Messwertgeber aufweisen. Die Vorrichtung ist als Ringflansch ausgebildet, der in Segmente unterteilt ist, die durch die Dehnungs-Messstrukturen miteinander verbunden sind.

Aus der Patentschrift EP 1 315 954 B1 ist ein Verfahren zur Ermittlung der Winkeldifferenz an einer geteilten Welle mit Phasenspuren und einem zwischengeschalteten Torsionsstab bekannt geworden, wobei mittels zugeordneter optischer Sensoren und einer Auswerteeinheit in Bezug auf eine Umdrehung der Welle zunächst jeweils mehrdeutige Phasensignale gewonnen werden. Das bekannte Verfahren zeichnet sich dadurch aus, dass wenigstens zwei Phasensignale zu einem Signal gewichtet aufsummiert werden, dass von dem Signal ein nicht ganzzahliger Anteil gebildet wird, wobei der Anteil proportional der Winkeldifferenz ist, und dass aus der Winkeldifferenz durch Multiplikation mit der Federrate des zwischengeschalteten Torsionsstabs das an der Welle anliegende Drehmoment bestimmt wird.

Induktive Sensoren, die in der vorliegenden Patentanmeldung eingesetzt werden, sind im Internet unter dem zur Anmelderin führenden Link: http://www.balluff.com beschrieben. Die induktiven Sensoren stellen ein Analogsignal bereit, das innerhalb des spezifizierten Arbeitsbereichs proportional zur Induktivität der abgetasteten Struktur ist.

Der Erfindung liegt die Aufgabe zugrunde, ein Verfahren und eine Vorrichtung anzugeben, die eine zuverlässige Ermittlung des Verdrehwinkels einer Welle und/oder eines an der Welle auftretenden Drehmoments, insbesondere bei rauen Umgebungsbedingungen, wie sie beispielsweise bei Getrieben auftreten, ermöglichen.

Die Aufgabe wird durch die in den unabhängigen Ansprüchen angegebenen Merkmale jeweils gelöst.

**Offenbarung der Erfindung**

Das erfindungsgemäße Verfahren zum Erfassen des Verdrehwinkels einer Welle und/oder des an der Welle auftretenden Drehmoments zeichnet sich dadurch aus, dass eine Welle von wenigstens einem ersten induktiven Sensor in Umfangsrichtung abgetastet wird, der ein Ausgangssignal bereitstellt, das von der Struktur, insbesondere der Inhomogenität, des metallischen Wellenmaterials beeinflusst ist, dass das Ausgangssignal mit einem ersten Referenzmuster verglichen wird und dass aus dem Vergleich ein erster Drehwinkel ermittelt wird. Weiterhin wird die Welle in einem vorgegebenen Abstand zum ersten induktiven Sensor von wenigstens einem zweiten induktiven Sensor in Umfangsrichtung abgetastet, der ein Ausgangssignal bereitstellt, das ebenfalls von der Inhomogenität des metallischen Wellenmaterials beeinflusst ist, wobei dieses Ausgangssignal mit einem zweiten Referenzmuster verglichen wird. Aus dem Vergleich wird ein zweiter Drehwinkel ermittelt und die Differenz zwischen dem ersten Drehwinkel und dem zweiten Drehwinkel wird als Verdrehwinkel der Welle ermittelt und bereitstellt.

Das erfindungsgemäße Verfahren beruht auf der Erkenntnis, dass die Struktur und ganz besonders die unvermeidliche Inhomogenität des Wellenmaterials ein ortsabhängiges Ausgangssignal eines induktiven Sensors zur Folge hat, das während der Drehung der Welle einen charakteristischen Verlauf aufweist. Die Ausgangssignale, welche die induktiven Sensoren bereitstellen, werden jeweils mit Referenzmustern verglichen, die zuvor in wenigstens einer Referenzdrehung der Welle ermittelt wurden. Die Referenzmuster können auch als Referenz-Signalverläufe bezeichnet werden. Die Referenzmuster werden bei wenigstens einer Umdrehung der Welle erfasst und für die nachfolgenden Vergleichsoperationen im Betrieb der Welle gespeichert. Die wenigstens eine Referenzdrehung beginnt gegebenenfalls bei einem bekannten Start-Drehwinkel und erstreckt sich über einen vorgegebenen Winkelbereich, vorzugsweise jedoch über eine volle Umdrehung. Die später im Betrieb der Welle stattfindenden Vergleiche der Ausgangssignale mit dem Referenzmuster liefern die Drehwinkel der Welle, aus denen der Verdrehwinkel der Welle und/oder ein an der Welle auftretendes Drehmoment berechnet werden kann.

Der wesentliche Vorteil des erfindungsgemäßen Verfahrens liegt darin, dass keine speziellen Merkmale auf oder in der Welle vorhanden sein müssen, welche die Induktivität und/oder Güte beeinflussen. Ausgenutzt wird die ohnehin vorhandene Beschaffenheit, insbesondere Inhomogenität, des Materials, aus dem die Welle gefertigt ist.

Das erfindungsgemäße Verfahren zum Erfassen des Verdrehwinkels einer Welle ermöglicht eine kontinuierliche Messung des Verdrehwinkels. Das erfindungsgemäße Verfahren weist eine hohe Zuverlässigkeit auch bei besonders widrigen Umgebungsbedingungen auf. Verschmutzungen sowohl der Sensoren als auch der Welle beeinflussen die Genauigkeit nicht. Die erfindungsgemäße Vorrichtung weist eine kompakte Bauform auf und kann ohne einen Eingriff in die Struktur der Welle realisiert werden.

Vorgesehen ist eine Differenzermittlung, welche die Differenz der ermittelten Drehwinkel bildet und bereitstellt. Die Winkeldifferenz entspricht dem Verdrehwinkel der Welle, der aufgrund eines an der Welle wirkenden Drehmoments auftritt. Das erfindungsgemäße Verfahren ermöglicht es daher, das an der Welle auftretende Drehmoment zu ermitteln. Der Verdrehwinkel wird hierbei als ein Maß für das an der Welle auftretende Drehmoment gewertet.

Aufgrund der vergleichsweise geringen Kosten eignet sich die erfindungsgemäße Vorrichtung zum Erfassen des Verdrehwinkels einer Welle und/oder eines an der Welle auftretenden Drehmoments besonders für die Serienproduktion.

Vorteilhafte Weiterbildungen und Ausgestaltungen der erfindungsgemäßen Vorgehensweise sind Gegenstände jeweils der abhängigen Ansprüche.

Eine Ausgestaltung sieht vor, dass das Referenzmuster bei wenigstens einer Referenzdrehung der Welle ermittelt wird, während der die Ausgangssignale der Sensoren jeweils in einem Referenzspeicher hinterlegt werden. Das erfindungsgemäße Verfahren ermöglicht damit die Ermittlung des Drehwinkels anhand eines Ausgangssignals im Bereich einer vollen Umdrehung der Welle von 360°.

Eine Weiterbildung dieser Ausgestaltung sieht vor, dass die Referenzmuster bei einer Referenzdrehung einer unbelasteten Welle ermittelt werden. Damit wird der Offset bei der Drehmoment-Ermittlung gleich null.

Eine Ausgestaltung sieht eine Normierung der Ausgangssignale der Sensoren in Bezug auf das Referenzmuster in Abhängigkeit von der Drehzahl der Welle vor. Die Einhaltung einer bestimmten Drehzahl im Betrieb der Welle ist nicht erforderlich, wenn eine solche Normierung in Abhängigkeit von Drehzahl unter Berücksichtigung eines Drehzahlsignals erfolgt.

Der Vergleich der Ausgangssignale der Sensoren mit den hinterlegten Referenzmustern kann beispielsweise dadurch erfolgen, dass ein im Referenzmuster enthaltener Spitzenwert oder eine markante Signalfolge mit Spitzenwerten ausgewählt wird. Im Rahmen des Vergleichs wird im Signalverlauf der Ausgangssignale nach den Spitzenwerten gesucht. Da der Spitzenwert des Referenzmusters einem bestimmten Winkel entspricht, kann der korrespondierende Drehwinkel angegeben werden.

Eine vorteilhafte Ausgestaltung sieht für den Vergleich ein Messfenster für die Ausgangssignale vor, das sich über einen vorgegebenen Winkelbereich erstreckt. Der Winkelbereich kann vorzugsweise 10° bis 90° betragen.

Die Vergleiche der Ausgangssignale jeweils mit den Referenzmustern können dann im Rahmen einer Korrelation des im Messfenster liegenden Ausgangssignals und des zugehörigen Referenzmusters erfolgen. Wenn der Maximalwert der Korrelation erreicht ist, entspricht die Position des Messfensters einem bestimmten Winkelbereich der Welle. Der Drehwinkel kann beispielsweise auf den Beginn, das Ende oder die Mitte des Messfensters festgelegt werden.

Eine Weiterbildung des erfindungsgemäßen Verfahrens sieht die Erfassung einer etwa vorhandenen Unwucht der Welle und eine Korrektur der Ausgangssignale vor den Vergleichen vor. Damit kann ein gegebenenfalls verfälschender Einfluss auf die Ausgangssignale vermindert werden. Die Korrektur der Unwucht wird vorzugsweise dadurch vorgenommen, dass die Ausgangssignale jeweils tiefpassgefiltert und die tiefpassgefilterten Signalanteile jeweils von den Ausgangssignalen subtrahiert werden.

Die erfindungsgemäße Vorrichtung zum Erfassen eines Verdrehwinkels einer Welle und/oder eines an der Welle auftretenden Drehmoments sieht zwei induktive Sensoren und eine signalverarbeitende Anordnung zur Durchführung sämtlicher Schritte des Verfahrens vor.

Die signalverarbeitende Anordnung enthält Referenzspeicher zur Aufnahme der Referenzmuster, einen Vergleicher und eine Differenzermittlung.

Durch den Einsatz der erfindungsgemäßen Vorrichtung ist eine äußerst zuverlässige Erfassung des Drehmoments einer Welle auch bei besonders widrigen Umgebungsbedingungen möglich.

Eine bevorzugte Verwendung der erfindungsgemäßen Vorrichtung zum Erfassen eines Verdrehwinkels und/oder eines daraus ermittelbaren Maßes für das an der Welle wirkende Drehmoment ist beispielsweise in großen Getrieben gegeben, die gegebenenfalls in besonderem Maße der Witterung und/oder enormen mechanischen Belastungen ausgesetzt sein können.

Weiterhin ist ein erfindungsgemäßes Computerprogramm zum Betreiben der Vorrichtung zum Erfassen des Verdrehwinkels einer Welle und/oder eines an der Welle auftretenden Drehmoments vorgesehen. Das Computerprogramm führt hierbei alle erforderlichen Schritte zur Ermittlung des Verdrehwinkels einer Welle und/oder eines an der Welle auftretenden Drehmoments aus, wenn das Computer-programm in einem Computer einer signalverarbeitenden Anordnung abläuft.

Ausführungsbeispiele der Erfindung sind in der Zeichnung dargestellt und in der nachfolgenden Beschreibung näher erläutert.

**Kurzbeschreibung der Figuren**

Figur 1 zeigt eine Welle, welche von einem ersten Sensor abgetastet wird,
Figur 2 zeigt ein Ausgangssignal des ersten Sensors über der Zeit mit hoher Zeitauflösung,
Figur 3 zeigt eine Welle, die von zwei in einem vorgegebenen Abstand bezogen auf die Wellenlängsrichtung versetzten Sensoren abgetastet wird,
Figur 4a zeigt wieder ein Ausgangssignal des ersten Sensors über der Zeit mit hoher Zeitauflösung,
Figur 4b zeigt ein Ausgangssignal des zweiten Sensors über der Zeit mit hoher Zeitauflösung,
Figur 5 zeigt eine belastete Welle, die von zwei in einem vorgegebenen Abstand bezogen auf die Wellenlängsrichtung versetzten Sensoren abgetastet wird,
Figur 6a zeigt ein Ausgangssignal des ersten Sensors bei belasteter Welle über der Zeit,
Figur 6b zeigt ein Ausgangssignal des zweiten Sensors bei belasteter Welle über der Zeit,
Figur 7 zeigt eine Welle, an welcher ein auftretendes Drehmoment zu einer Verdrehung der Welle führt,
Figur 8 zeigt die Ausgangssignale des ersten und zweiten Sensors bei belasteter Welle über der Zeit für mehr als eine Umdrehung der Welle,
Figur 9 zeigt ein Blockschaltbild einer signalverarbeitende Anordnung,
Figur 10 zeigt reale Ausgangssignale der Sensoren über der Zeit für mehr als eine Umdrehung der Welle,
Figur 11 zeigt das in Figur 10 gezeigte Signal nach einer Signalglättung und
Figur 12 zeigt eine Ergänzung der in Figur 9 gezeigten signalverarbeitende Anordnung.

**Detaillierte Beschreibung der Ausführungsbeispiele**

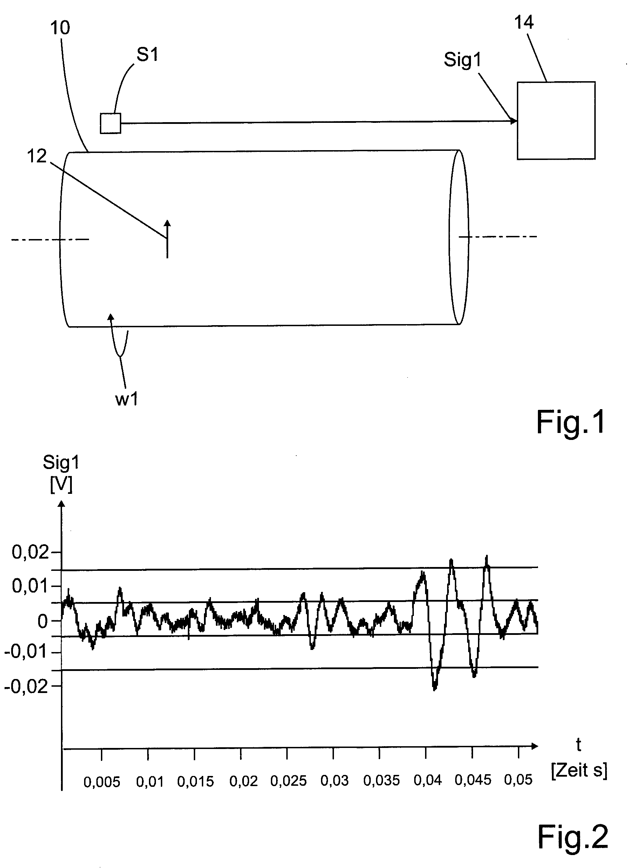

Figur 1 zeigt eine Welle 10, welche von einem ersten induktiven Sensor S1 in Umfangsrichtung 12 abgetastet wird. Der erste induktive Sensor S1 stellt ein Ausgangssignal Sig1 einer signalverarbeitenden Anordnung 14 zur Verfügung.

Das Material und die Struktur der Welle 10 beeinflussen wenigstens einen Spulenparameter, beispielsweise die Güte eines Schwingkreises des ersten induktiven Sensors S1, der von der Anmelderin beispielsweise unter der eingangs angegebenen Fundstelle angeboten wird.

An sich würde der erste induktive Sensor S1 ein Ausgangssignal Sig1 bereitstellen, das bei konstantem Abstand zur Welle 10 bei Stillstand oder bei einer Drehung der Welle 10 konstant wäre. Aufgrund von Inhomogenitäten des Materials der Welle 10 tritt jedoch das in Figur 2 gezeigte drehwinkelabhängige Ausgangssignal Sig1 auf, das bei einer Drehung der Welle 10 einen charakteristischen eindeutigen Verlauf in Abhängigkeit von einem ersten Drehwinkel w1 der Welle 10 aufweist.

Das erfindungsgemäße Verfahren nutzt diese Erkenntnis zum Erfassen von Drehwinkeln aus, um daraus den Verdrehwinkel der Welle 10 und/oder des an der Welle 10 wirkende Drehmoments zu bestimmen.

Bei dem in Figur 2 gezeigten zeitlichen Verlauf des Ausgangssignal Sig1 des ersten Sensors S1 wird davon ausgegangen, dass die Welle 10 in den dargestellten 50 ms einen bestimmten ersten Drehwinkel w1 von beispielsweise einigen Grad überstreicht. Das Ausgangssignal Sig1 liegt, ausgehend von einem willkürlich festgelegten mittleren Wert 0 V, in einem Bereich von ungefähr +/- 20 mV. Die Signalhöhe wird von der Struktur, beispielsweise der Inhomogenität des Materials der Welle 10 bestimmt und lässt sich durch Vergleich mit einem zuvor hinterlegten Referenzmuster eindeutig einem bestimmten ersten Drehwinkel w1 der Welle 10 zuordnen.

Der nicht dargestellte gesamte Signalhub des Sensors S1 kann dagegen zwischen beispielsweise 0 V und 10 V liegen. Die Lage des in Figur 2 stark vergrößert dargestellten Signalbereichs liegt innerhalb des großen Bereichs bei beispielsweise 5 V, der in Figur 2 der Spannung 0 V entsprechen soll. Die Lage im gesamten Signalbereich kann in Abhängigkeit insbesondere vom Abstand des Sensors S1 von der Welle 10 variiert werden.

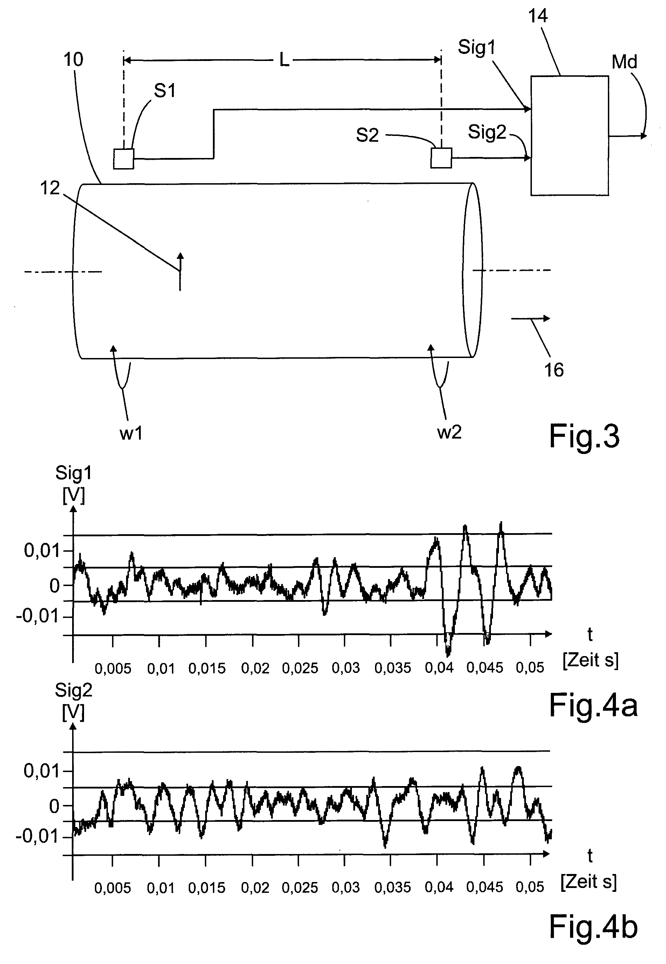

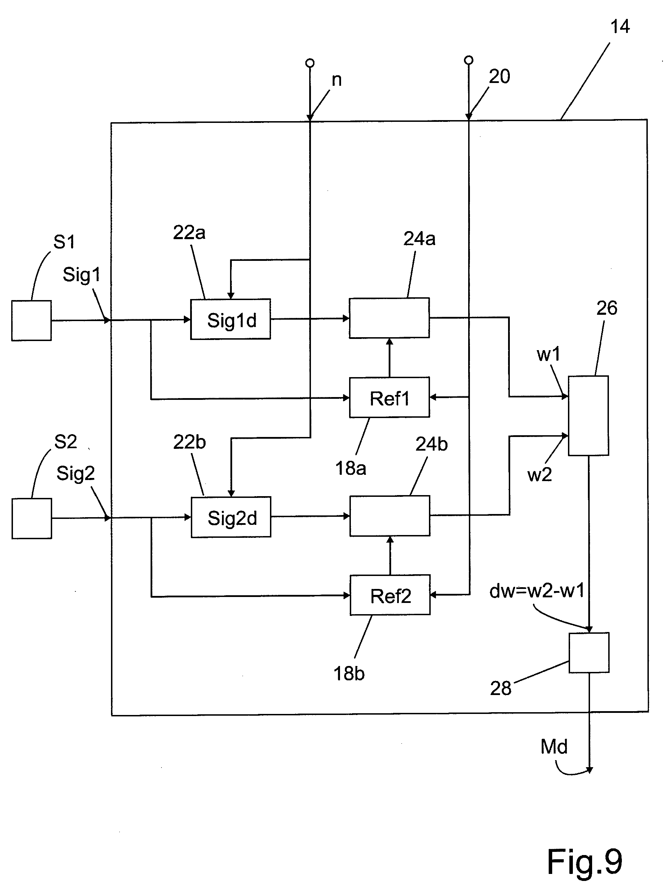

Figur 3 zeigt eine Anordnung mit zwei induktiven Sensoren S1, S2, welche die Welle 10 jeweils in Umfangsrichtung 12 abtasten. Der zweite induktive Sensor S2 ist in Längsrichtung 16 der Welle 10 mit einem Abstand L versetzt zum ersten induktiven Sensor S2 positioniert. Der zweite induktive Sensor S2 stellt der signalverarbeitenden Anordnung 14 ein Ausgangssignal Sig2 zur Verfügung, aus dem der zweite Drehwinkel w2 der Welle 10 im Bereich des zweiten Sensors S2 ermittelt werden kann. Mit den Ausgangssignalen Sig1, Sig2 der beiden Sensoren S1, S2 kann ein Verdrehwinkel der Welle 10 beziehungsweise ein an der Welle 10 auftretendes Drehmoment Md berechnet werden, wie weiter unten im Rahmen der Beschreibung der in Figur 9 gezeigten signalverarbeitenden Anordnung 14 näher erläutert wird.

Zur Erhöhung der Robustheit der Anordnung, insbesondere im Hinblick auf Störeinflüsse, welche auf die Ausgangssignale Sig1, Sig2 einwirken, können anstelle des einen in den Figuren 1 und 3 gezeigten ersten induktiven Sensors S1 zumindest zwei erste induktive Sensoren S1 vorgesehen sein, die vorzugsweise um 90° versetzt in Umfangsrichtung 12 der Welle 10 positioniert sind. Ebenso können zumindest zwei zweite induktive Sensoren S2 vorgesehen sein. Das erste und zweite Ausgangssignal Sig1, Sig2 steht dann redundant zur Verfügung, sodass eine Plausibilisierung und/oder beispielsweise eine Mittelwertbildung möglich sind.

In Figur 4a ist das bereits in Figur 2 gezeigte Ausgangssignal Sig1 des ersten induktiven Sensors S1 gezeigt, das bei einer unbelasteten Welle 10 auftritt. Entsprechend zeigt Figur 4b das Ausgangssignal Sig2 des zweiten Sensors S2 im gleichen Zeitbereich von 50 ms. Beide Ausgangssignale Sig1, Sig2 weisen einen völlig unterschiedlichen Verlauf auf, der jeweils von den Inhomogenitäten im Bereich des ersten Sensors S1 einerseits und im Bereich des zweiten Sensors S2 andererseits bestimmt wird. Da die Welle 10 unbelastet angenommen wird, sind jedoch der aus den Ausgangssignale Sig1, Sig2 ermittelte erste beziehungsweise zweite Drehwinkel w1, w2 gleich groß.

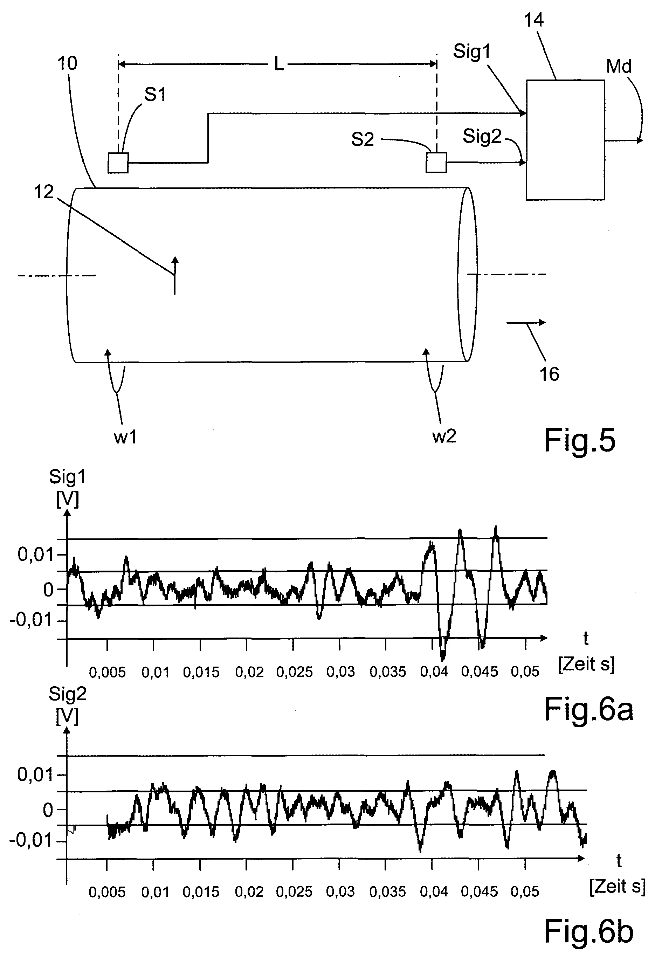

Figur 5 zeigt eine der Figur 3 entsprechende Anordnung, wobei in diesem Fall aber davon ausgegangen wird, dass die Welle 10 mit einem Drehmoment Md belastet ist, sodass eine Verdrehung (Torsion) der Welle 10 auftritt. In diesem Fall weichen der erste und der zweite Drehwinkel w1, w2 voneinander ab.

Beispielhaft wird davon ausgegangen, dass sich der erste Drehwinkel w1 gegenüber dem in Figur 3 auftretenden ersten Drehwinkel w1 nicht, sondern nur der zweite Drehwinkel w2 ändern soll. Dementsprechend stimmt der in Figur 6a gezeigte Signalverlauf des Ausgangssignals Sig1 des ersten Sensors S1 mit dem in Figur 4a gezeigten Signalverlauf überein. Der in Figur 6b gezeigte Signalverlauf des Ausgangssignals Sig2 des zweiten Sensors S2 weicht jedoch von dem in Figur 4b gezeigten Signalverlauf ab. Aufgrund der vom Drehmoment Md verursachten Änderung des zweiten Drehwinkels w2 ist der in Figur 6b gezeigte Signalverlauf gegenüber dem in Figur 4b gezeigten Signalverlauf zeitlich versetzt. Im gezeigten Ausführungsbeispiel soll das Ausgangssignal Sig2 um 5 ms nach später verschoben sein. Der daraus resultierende zweite Drehwinkel w2 tritt daher gemäß Figur 6b um 5 ms später auf als bei der unbelasteten Welle 10 gemäß Figur 4b.

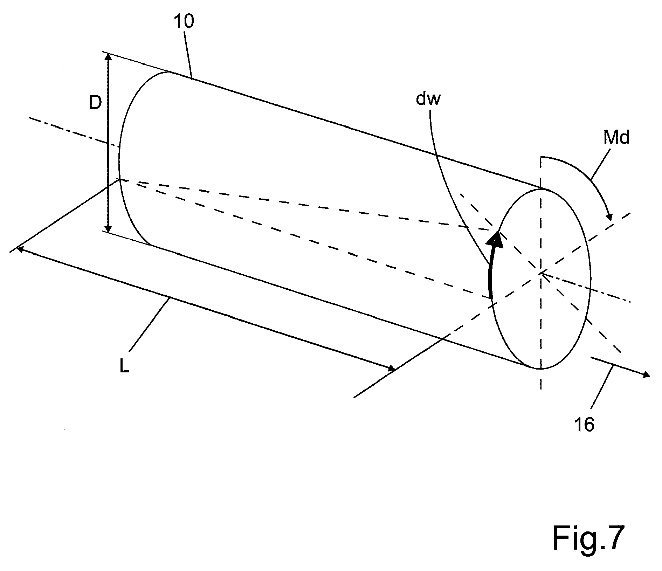

Figur 7 zeigt die Welle 10 oder zumindest einen Abschnitt der Welle 10, auf die ein Drehmoment Md einwirkt, das zu einer Torsion der Welle 10 führt. Bezogen auf einen vorgegebenen Abstand L in Längsrichtung 16 der Welle 10 hängt der Verdrehwinkel dw der Welle 10 vom Betrag des Drehmoments Md ab. Im Bereich elastischer Verformung ist der Verdrehwinkel dw in Grad proportional dem Produkt aus Drehmoment Md in Nmm und dem vorgegebenen Abstand L in mm sowie umgekehrt proportional zu dem Produkt aus Schubmodul G in N/mm$^2$, beispielsweise 80.000 N/mm$^2$ bei Stahl und dem polaren Trägheitsmoment Ip. Das polare Trägheitsmoment Ip wiederum ist proportional zum Produkt aus π/32 und der vierten Potenz des Wellendurchmessers D in mm. Es gilt:

$$dw = \frac{Md}{G} \cdot \frac{L}{Ip}$$

mit

$$Ip = \frac{\pi}{32} \cdot D^4$$

Das erfindungsgemäße Verfahren ermöglicht die Ermittlung des Verdrehwinkels dw und somit die Angabe des in der Welle 10 wirkenden Drehmoments Md.

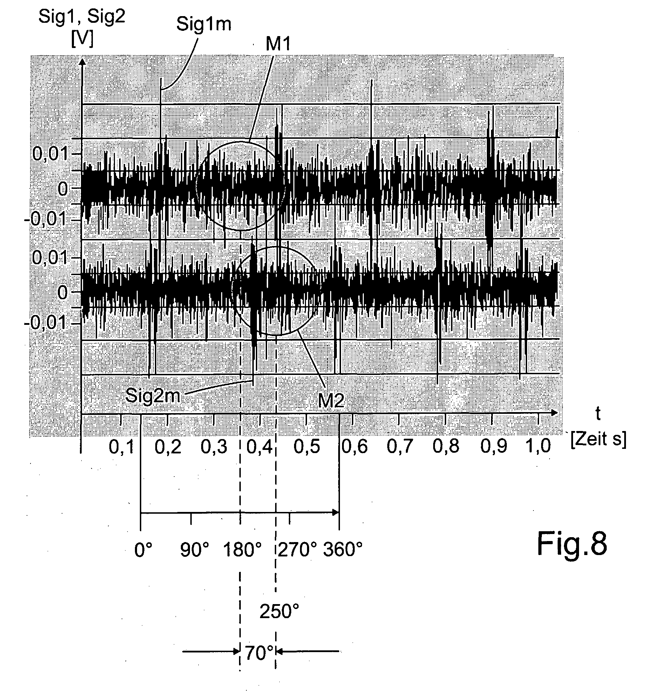

Figur 8 zeigt die Ausgangssignale Sig1, Sig2 bei einer mit einem Drehmoment beaufschlagten Welle 10 für zwei volle Umdrehungen der Welle 10. Die Ausgangssignale Sig1, Sig2 entsprechen einer Welle 10, die keine Unwucht aufweist. Eingetragen ist ein Winkelbereich von 360°, der sich auf die im oberen Teilbild gezeigten Ausgangssignal Sig1 des ersten Sensors S1 bezieht. Aufgrund der Belastung der Welle 10 mit einem Drehmoment Md ist der im unteren Teilbild gezeigte Ausgangssignal Sig2 des zweiten Sensors S2 um eine Zeit von beispielsweise ungefähr 0,1 s verschoben. Bei einer angenommenen Umdrehungsrate von 0,5 s pro Umdrehung gemäß Figur 8 entsprechen der Zeitverschiebung von 0,1 s einem Verdrehwinkel dw der Welle 10 um ungefähr 70°.

Im Verlauf des Ausgangssignal Sig1 des ersten Sensors S1 ist ein erstes Messfenster M1 und im Verlauf des Ausgangssignals Sig2 des zweiten Sensors S2 ein zweites Messfenster M2 eingetragen. Die Messfenster M1, M2 erstrecken sich über einen vorgegebenen Zeitbereich entsprechend einem vorgegebenen Drehwinkelbereich. In Figur 8 sind die Messfenster M1, M2 relativ lang. In der Praxis wird ein Bereich von einigen wenigen Prozent bis 25 % einer Wellenumdrehung entsprechend einem Bereich von ungefähr minimal 10° bis maximal 90° ausgewählt.

In Figur 8 sind eine erste markante Signalspitze Sig1m des Ausgangssignals Sig1 des ersten Sensors S1 und eine markante Signalspitze Sig2m des Ausgangssignals Sig2 des zweiten Sensors S2 eingetragen.

Gemäß der in Figur 9 gezeigten signalverarbeitenden Anordnung 14 werden die Ausgangssignale Sig1, Sig2 der beiden Sensoren S1, S2 nach einer nicht näher dargestellten Signalpegelanpassung mittels Signalverstärkern und jeweils einer Analog/Digital-Konvertierung in jeweils einem Referenzspeicher 18a, 18b hinterlegt. Zur Speicherung der Referenzmuster Ref1, Ref2 wird ein der signalverarbeitenden Anordnung 14 zur Verfügung gestelltes Umschaltsignal 20 derart fest-gelegt, dass die Speicherung der Referenzmuster Ref1, Ref2 in den jeweiligen Referenzspeichern 18a, 18b erfolgen kann. Anschließend wird das Umschaltsignal 20 auf einen Normalbetrieb umgeschaltet, wobei die hinterlegten Referenzmuster Ref1, Ref2 nicht mehr verändert werden.

Die Speicherung der Referenzmuster Ref1, Ref2 erfolgt bei einer bestimmten Drehzahl der Welle 10. Dadurch kann erreicht werden, dass die Anzahl der für die abgetasteten Ausgangssignale Sig1, Sig2 zur Verfügung stehenden Speicherplätze in den beiden Referenzspeichern 18a, 18b einem bestimmten Drehwinkel, vorzugsweise einer vollen Umdrehung der Welle 10 entsprechen, sodass später der gesamte Drehwinkelbereich von 360° der Welle 10 abgedeckt werden kann.

Die digitalisierten Ausgangssignale Sig1d, Sig2d, werden weiterhin einem Normierungsspeicher 22a, 22b zugeführt. Im Folgenden werden die digitalisierten Ausgangssignale Sig1d, Sig2d weiterhin als Ausgangssignale Sig1, Sig2 bezeichnet. In den Normierungsspeichern 22a, 22b werden die Ausgangssignale Sig1, Sig2 einer Anzahl von Speicherstellen zugewiesen, die einen vorgegebenen Drehwinkelbereich widerspiegeln. Gegebenenfalls werden Abtastwerte einer vollen Umdrehung der Welle 10 gespeichert. Vorzugsweise wird jedoch jeweils nur diejenige Anzahl von Abtastwerten gespeichert, die in einem Messfenster M1, M2 liegen.

Die Speicherung der Ausgangssignale Sig1, Sig2 erfolgt vorzugsweise in Abhängigkeit von der Drehzahl n der Welle 10, sofern im späteren Betrieb der Welle 10 unterschiedliche Drehzahlen auftreten. Daher wird der signalverarbeitende Anordnung 14 die Drehzahl n der Welle 10 zur Verfügung gestellt.

Die aus den Normierungsspeichern 22a, 22b ausgelesenen Werte gelangen jeweils in einen Vergleicher 24a, 24b, der die Ausgangssignale Sig1, Sig2 mit den in den Referenzspeichern 18a, 18b hinterlegten Referenzmustern Ref1, Ref2 vergleicht.

Eine erste Möglichkeit zum Vergleich sieht die Detektion eines markanten, in den Ausgangssignalen Sig 1, Sig2 aufgetretenen Signalanteils Sig1m, Sig2m vor. Das können beispielsweise die in Figur 8 eingetragenen Signalspitzen Sig1m, Sig2m sein. Bei diesem Vergleich können die Messfenster M1, M2 stark verkürzt werden.

Im Extremfall reicht ein gespeicherter Abtastwert für den Vergleich aus. Aufgrund der beiden Vergleiche in den Vergleichern 24a, 24b können den beiden Signalspitzen Sig1m, Sig2m die korrespondierenden Drehwinkel w1, w2 zugeordnet werden. Prinzipiell können weitere markante Signalstellen wie beispielsweise zwei nebeneinander liegende Signalspitzen dem Vergleich zugrunde gelegt werden. Mit diesem Vorgehen können jedoch nur einzelne konkrete Drehwinkel w1, w2 ermittelt werden.

Eine besonders vorteilhafte Realisierung sieht deshalb einen Vergleich der Ausgangssignale Sig1, Sig2 mit den Referenzmustern Ref1, Ref2 im Rahmen einer Korrelation vor. Bei diesem Vorgehen können sämtliche Drehwinkel w1, w2 ermittelt werden. Zum Vergleich mit dem Referenzmuster Ref1, Ref2 werden die jeweils im Messfenster M1, M2 liegenden Abtastwerte herangezogen. Die Korrelation kann folgendermaßen berechnet werden:

$$\mathbf{Korr} = \frac{1}{2\pi} \cdot \int_{MB}^{ME} [\mathbf{Sig}\,(t) \cdot \mathbf{Ref}\,(t + \Delta t)]\,dt$$

Hierbei sind:

Sig (t) das jeweils zu analysierende Ausgangssignal Sig1, Sig2,
Ref (t + $\Delta$t) das zugehörige Referenzsignal Ref1, Ref2,
MB der Beginn und
ME das Ende jeweils der Messfenster M1, M2.

Die Berechnung erfolgt für verschiedene $\Delta$t. Wenn der Wert "Korr" sein Maximum erreicht hat, wird davon ausgegangen, dass der im Messfenster M1, M2 liegende Signalbereich mit dem Referenzmuster Ref1, Ref2 bestmöglich übereinstimmt. Der zu ermittelnde Drehwinkel w1, w2 kann beispielsweise am Beginn oder Ende oder auch beispielsweise in der Mitte des Messfensters M1, M2 festgelegt werden. Bei dem in Figur 8 gezeigten Ausführungsbeispiel ist die Mitte der Messfenster M1, M2 ausgewählt worden.

Im gezeigten Ausführungsbeispiel sind zwei Referenzspeicher 18a, 18b sowie zwei Vergleicher 24a, 24b gezeigt. In der signalverarbeitenden Anordnung 14 können diese Komponenten selbstverständlich als ein Speicher und als ein Vergleicher realisiert werden, welche die vorgegebenen Programmschritte sequenziell durchführen.

Die beiden Drehwinkel w1, w2 können von der signalverarbeitende Anordnung 14 unmittelbar ausgegeben werden. Die signalverarbeitende Anordnung 14 enthält die Differenzermittlung 26, welche die Differenz w2-w1 zwischen den beiden Drehwinkeln w1, w2 ermittelt. Die Differenz w2-w1 entspricht dem Verdrehwinkel dw der Welle 10.

Der Verdrehwinkel dw kann in einer Umformung 28 anhand des weiter oben angegebenen Zusammenhangs zwischen dem Verdrehwinkel dw und dem an der Welle 10 aufgetretenen Drehmoment Md in ein Maß für das Drehmoment Md umgeformt und ausgegeben werden.

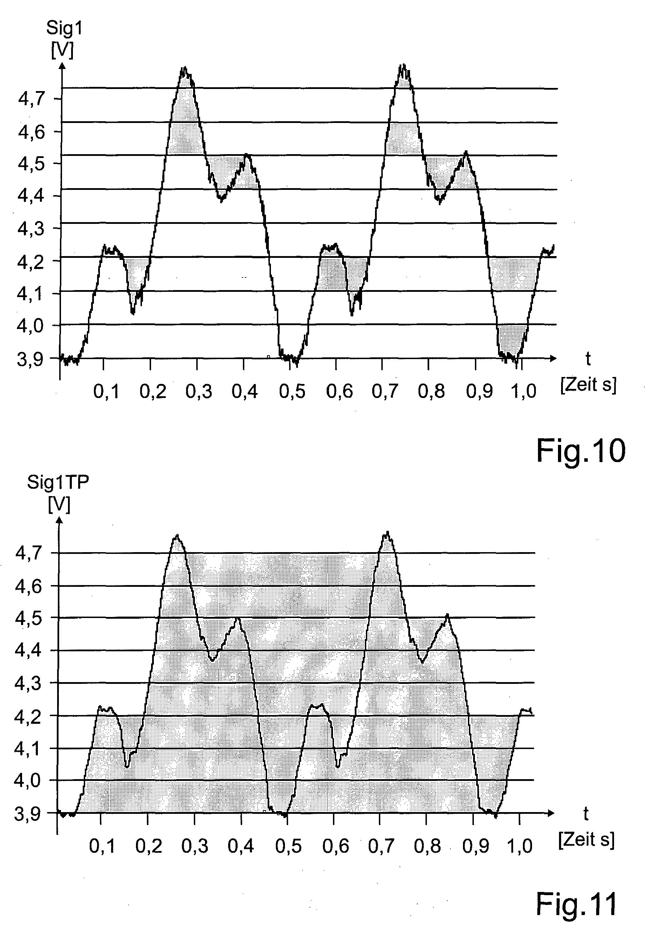

Gemäß einer Ausgestaltung ist die Erfassung einer gegebenenfalls vorhandenen Unwucht der Welle 10 vorgesehen. Die Ausgangssignale Sig1, Sig2 sind in Figur 10 bei einer vergleichsweise großen Unwucht der Welle 10 dargestellt, wobei wieder zwei volle Umdrehungen der Welle 10 gezeigt sind.

Der Einfluss der Unwucht der Welle 10 auf die Signalverarbeitung kann dadurch beseitigt werden, dass ein Signal gewonnen wird, das allein die Unwucht wider-spiegelt. Ein solches Signal, welches beispielhaft in Figur 11 dargestellt ist, wird anhand einer Tiefpassfilterung erhalten. Ein Tiefpass erster Ordnung reicht bereits aus. Die Zeitkonstante eines Tiefpasses erster Ordnung wird experimentell ermittelt und sollte derart festgelegt werden, dass die höherfrequenten Signalanteile möglichst weitgehend beseitigt werden, ohne dass der die Unwucht widerspiegelnde Signalanteil gedämpft wird.

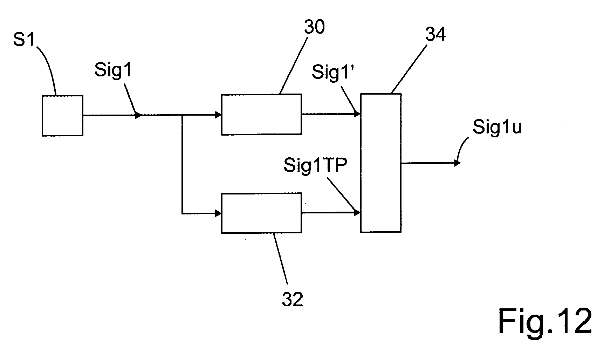

Ein Blockschaltbild einer Ergänzung der signalverarbeitenden Anordnung 14 ist in Figur 12 gezeigt. Das Ausgangssignal Sig1 wird einerseits einer Signalverzögerung 30 und andererseits einem Tiefpassfilter 32 zugeführt. Die Signalverzögerung 30 soll eine Phasenverschiebung des Tiefpassfilters 32 für die anschließende Differenzbildung in der Unwucht-Differenzermittlung 34 kompensieren und verschiebt daher nur die Phase des Ausgangssignals Sig1, wobei die Amplitude des phasenverschobenen Ausgangssignals Sig1' unverändert bleibt. Die Phasenverschiebung kann mit einem Allpassfilter realisiert werden. Das Tiefpassfilter 32 kann adaptiv realisiert sein, um sich an die Drehzahl der Welle 10 anpassen zu können. Das tiefpassgefilterte Signal Sig1TP kann auch als gleitender Mittelwert bezeichnet werden.

Das tiefpassgefilterte Signal Sig1TP spiegelt die Unwucht der Welle 10 wider. Die Unwucht-Differenzermittlung 34 stellt ein Ausgangssignal Sig1u zur Verfügung, das von den von der Unwucht der Welle 10 herrührenden Signalanteilen zumindest weitgehend befreit ist. Dieses Signal Sig1u wird der weiteren Signalverarbeitung zugrunde gelegt. Das Ausgangssignal Sig2 des zweiten Sensors S2 wird entsprechend dem Ausgangssignal Sig1 des ersten Sensors S1 bearbeitet.

**Patentansprüche**

1. Verfahren zum Erfassen eines Verdrehwinkels (dw) einer Welle (10) und/oder eines an der Welle (10) auftretenden Drehmoments (Md), bei dem die Welle (10) von wenigstens einem ersten Sensor (S1) in Umfangsrichtung (12) abgetastet wird, der ein Ausgangssignal (Sig1) bereitstellt, das von der Inhomogenität des metallischen Wellenmaterials beeinflusst ist, bei dem die Welle (10) in einem vorgegebenen Abstand (L) zum ersten Sensor (S1) von wenigstens einem zweiten Sensor (S2) in Umfangsrichtung (12) abgetastet wird, der ein Ausgangssignal (Sig2) bereitstellt, das ebenfalls von der Inhomogenität des metallischen Wellenmaterials beeinflusst ist, **dadurch gekennzeichnet, dass** als erster und zweiter Sensor (S1, S2) jeweils ein induktiver Sensor (S1, S2) vorgesehen ist, dass das Ausgangssignal (Sig1) des ersten induktiven Sensors (S1) mit einem ersten Referenzmuster (Ref1) verglichen wird, dass das Ausgangssignal (Sig2) des zweiten induktiven Sensors (S2) mit einem zweiten Referenzmuster (Ref2) verglichen wird, dass die beiden Referenzmuster (Ref1, Ref2) zuvor bei einer Referenzdrehung der Welle (10) ermittelt werden, die sich über einen vorgegebenen Winkelbereich erstreckt, dass aus dem Vergleich des Ausgangssignals (Sig1) des ersten induktiven Sensors (S1) mit dem ersten Referenzmuster (Ref1) ein erster Drehwinkel (w1) und aus dem Vergleich des Ausgangssignals (Sig2) des zweiten induktiven Sensors (S2) mit dem zweiten Referenzmuster (Ref2) ein zweiter Drehwinkel (w2) ermittelt werden und dass die Differenz (w2-w1) zwischen dem ersten Drehwinkel (w1) sowie dem zweiten Drehwinkel (w2) als Verdrehwinkel (dw) der Welle (10) ermittelt und bereitgestellt wird.

2. Verfahren nach Anspruch 1, **dadurch gekennzeichnet, dass** das Referenzmuster (Ref1, Ref2) bei wenigstens einer Referenzdrehung der Welle (10) ermittelt wird, welche sich über eine vollständige Umdrehung der Welle (10) erstreckt.

3. Verfahren nach Anspruch 1 oder 2, **dadurch gekennzeichnet, dass** das Referenzmuster (Ref1, Ref2) bei wenigstens einer Referenzdrehung der Welle (10) ermittelt wird, bei welchem die Welle (10) unbelastet ist.

4. Verfahren nach Anspruch 1, **dadurch gekennzeichnet, dass** für den Vergleich des Ausgangssignals (Sig1, Sig2) mit dem Referenzmuster (Ref1, Ref2) eine Normierung des Ausgangssignals (Sig1, Sig2) in Bezug auf das Referenzmuster (Ref1, Ref2) in Abhängigkeit von der Drehzahl der Welle (10) vorgenommen wird.

5. Verfahren nach Anspruch 4, **dadurch gekennzeichnet, dass** zur Normierung ein Drehzahlsignal (n) herangezogen wird.

6. Verfahren nach Anspruch 1, **dadurch gekennzeichnet, dass** für den Vergleich ein im Referenzmuster (Ref1, Ref2) enthaltener Ausgangssignal-Spitzenwert (Sig1 m, Sig2m) ausgewählt wird.

7. Verfahren nach Anspruch 1, **dadurch gekennzeichnet, dass** für den Vergleich ein Messfenster (M1, M2) vorgegeben wird, das einem vorgegebenen Drehwinkelbereich entspricht.

8. Verfahren nach Anspruch 7, **dadurch gekennzeichnet, dass** der Winkelbereich 10° bis 90° beträgt.

9. Verfahren nach Anspruch 7 oder 8, **dadurch gekennzeichnet, dass** der Drehwinkel (w1, w2) der Welle (10) anhand einer Korrelation des Referenzmusters (Ref1, Ref2) mit dem im Messfenster (M1, M2) liegenden Anteil des Ausgangssignals (Sig1, Sig2) ermittelt wird.

10. Verfahren nach Anspruch 1, **dadurch gekennzeichnet, dass** eine Unwucht der Welle (10) erfasst und dass das Ausgangssignal (Sig1, Sig2) vor dem Vergleich korrigiert wird.

11. Verfahren nach Anspruch 10, **dadurch gekennzeichnet, dass** die Korrektur der Unwucht dadurch vorgenommen wird, dass das Ausgangssignal (Sig1, Sig2) tiefpassgefiltert und dass das tiefpassgefilterte Ausgangssignal (Sig1TP, Sig2TP) vom Ausgangssignal (Sig1, Sig2) subtrahiert wird.

12. Vorrichtung zum Erfassen eines Verdrehwinkels (dw) einer Welle (10) und/oder eines an der Welle (10) auftretenden Drehmoments (Md), **dadurch gekennzeichnet, dass** zwei induktive Sensoren (S1, S2) und eine signalverarbeitende Anordnung (14) vorgesehen sind, wobei die Sensoren und die signalverarbeitende Anordnung zur Durchführung sämtlicher Schritte des Verfahrens nach einem der vorhergehenden Ansprüche ausgebildet sind.

13. Vorrichtung nach Anspruch 12, **dadurch gekennzeichnet, dass** die signalverarbeitende Anordnung (14) einen Referenzspeicher (18a, 18b) zur Aufnahme der beiden Referenzmuster (Ref1, Ref2), einen Vergleicher (24a, 24b) zum Vergleich der Ausgangssignale (Sig1, Sig2) mit den Referenzmustern (Ref1, Ref2), eine Differenz-Ermittlung (26) zur Ermittlung des Verdrehwinkels (dw) der Welle (10) und eine Umformung (28) zur Ermittlung des an der Welle (10) auftretenden Drehmoments (Md) enthält.

14. Verwendung der Vorrichtung nach einem der Ansprüche 12 oder 13 bei Wellen (10) von Getrieben.

15. Computerprogramm zur Durchführung des Verfahrens zum Erfassen eines Verdrehwinkels (dw) einer Welle (10) und/oder eines an der Welle (10) auftretenden Drehmoments (Md), wobei das Computerprogramm alle Schritte des Verfahrens gemäß einem der Ansprüche 1 - 11 zur Ermittlung des Drehwinkels (w1, w2) der Welle (10) und/oder des an der Welle (10) auftretenden Drehmoments (Md) ausführt, wenn das Computerprogramm in der signalverarbeitenden Anordnung (14) abläuft.

**Claims**

1. Method for the recording of a twisting angle (dw) of a shaft (10) and/or of a torque (Md) occurring on the shaft (10), wherein the shaft (10) is scanned by at least one first sensor (S1) in the peripheral direction (12), said sensor providing an output signal (Sig1) which is influenced by the inhomogeneity of the metallic shaft material, wherein the shaft (10) is scanned at a predetermined distance (L) from the first sensor (S1) by at least one second sensor (S2) in the peripheral direction (12), said sensor providing an output signal (Sig2) which is also influenced by the inhomogeneity of the metallic shaft material, **characterised in that** an inductive sensor (S1, S2) is provided in each case as the first and second sensor (S1, S2), the output signal (Sig1) of the first inductive sensor (S1) is compared to a first reference pattern (Ref1), the output signal (Sig2) of the second inductive sensor (S2) is compared to a second reference pattern (Ref2), both reference patterns (Ref1, Ref2) are previously determined during a reference twist of the shaft (10) which spans a predetermined angle range, a first rotation angle (w1) is determined from the comparison of the output signal (Sig1) of the first inductive sensor (S1) with the first reference pattern (Ref1) and a second rotation angle (w2) is determined from the comparison of the output signal (Sig2) of the second inductive sensor (S2) with the second reference pattern (Ref2), and the difference (w2-w1) between the first rotation angle (w1) and the second rotation angle (w2) is determined and provided as the twisting angle (dw) of the shaft (10).

2. Method according to claim 1, **characterised in that** the reference pattern (Ref1, Ref2) is determined during at least one reference twist of the shaft (10), which spans a full rotation of the shaft (10).

3. Method according to claim 1 or 2, **characterised in that** the reference pattern (Ref1, Ref2) is determined during at least one reference twist of the shaft (10), during which the shaft (10) is unloaded.

4. Method according to claim 1, **characterised in that** a standardisation of the output signal (Sig1, Sig2) in relation to the reference pattern (Ref1, Ref2)) is carried out depending on the rotational speed of the shaft (10) for the comparison of the output signal (Sig1, Sig2) and the reference pattern (Ref1, Ref2).

5. Method according to claim 4, **characterised in that** a rotational speed signal (n) is used for the standardisation.

6. Method according to claim 1, **characterised in that** an output signal peak value (Sig1m, Sig2m) contained in the reference pattern (Ref1, Ref2) is selected for the comparison.

7. Method according to claim 1, **characterised in that** a measuring window (M1, M2) is preset for the comparison, said measuring window corresponding to a predetermined rotation angle range.

8. Method according to claim 7, **characterised in that** the angle range is 10° to 90°.

9. Method according to claim 7 or 8, **characterised in that** the rotation angle (w1, w2) of the shaft (10) is determined by means of a correlation of the reference pattern (Ref1, Ref2) with the portion of the output signal (Sig1, Sig2) located in the measuring window (M1, M2).

10. Method according to claim 1, **characterised in that** an imbalance of the shaft (10) is determined and the output signal (Sig1, Sig2) is corrected before the comparison.

**11.** Method according to claim 10, **characterised in that** the correction of the imbalance is carried out by the output signal (Sig1, Sig2) being low pass filtered and the low pass filtered output signal (Sig1TP, Sig2TP) being subtracted from the output signal (Sig1, Sig2).

**12.** Device for the recording of a twisting angle (dw) of a shaft (10) and/or of a torque (Md) occurring on the shaft (10), **characterised in that** two inductive sensors (S1, S2) and a signal-processing arrangement (14) are provided, wherein the sensors and the signal-processing arrangement are formed for the execution of all steps of the method according to one of the preceding claims.

**13.** Device according to claim 12, **characterised in that** the signal-processing arrangement (14) contains a reference memory (18a, 18b) for the recording of both reference patterns (Ref1, Ref2), a comparator (24a, 24b) for the comparison of the output signals (Sig1, Sig2) with the reference patterns (Ref1, Ref2), a difference calculation (26) for the determination of the twisting angle (dw) of the shaft (10) and a conversion (28) for the determination of the torque (Md) occurring on the shaft (10).

**14.** Use of the device according to one of claims 12 or 13 for shafts (10) of gearboxes.

**15.** Computer program for the execution of the method for the recording of a twisting angle (dw) of a shaft (10) and/or of a torque (Md) occurring on the shaft (10), wherein the computer program performs all steps of the method according to one of claims 1-11 for the determination of the rotation angle (w1, w2) of the shaft (10) and/or of the torque (Md) occurring on the shaft (10) when the computer program runs in the signal-processing arrangement (14).

**Revendications**

**1.** Procédé de détection d'un angle de torsion (dw) d'un arbre (10) et/ou d'un couple de rotation (Md) s'exerçant sur cet arbre (10), selon lequel l'arbre (10) est palpé dans la direction périphérique (12) par au moins un premier capteur (S1) qui fournit un signal de sortie (Sig1) qui est influencé par le caractère non homogène du matériau métallique de l'arbre, selon lequel l'arbre (10) est palpé dans la direction périphérique (12) à une distance (L) prédéfinie du premier capteur (S1) par au moins un second capteur (2) situé qui fournit un signal de sortie (Sig2) qui est également influencé par le caractère non homogène du matériau métallique de l'arbre,
**caractérisé en ce qu'**
en tant que premier et second capteurs (S1, S2) il est respectivement prévu un capteur inductif (S1, S2), le signal de sortie (Sig1) du premier capteur inductif (S1) est comparé à un premier modèle de référence (Ref1), le signal de sortie (Sig2) du second capteur inductif (S2) est comparé à un second modèle de référence (Ref2), les deux modèles de référence (Ref1, Ref2) sont tout d'abord déterminés lors d'une rotation de référence de l'arbre (10) qui s'étend sur une plage angulaire prédéfinie, à partir de la comparaison du signal de sortie (Sig1) du premier capteur inductif (S1) et du premier modèle de référence (Ref1) on détermine un premier angle de rotation (w1) et à partir de la comparaison du signal de sortie (Sig2) du second capteur inductif (S2) et du second modèle de référence (Ref2) on détermine un second angle de rotation (w2), et la différence (w2-w1) entre le premier angle de rotation (w1) et le second angle de rotation (w2) est déterminé et fourni en tant qu'angle de torsion (dw) de l'arbre (10).

**2.** Procédé conforme à la revendication 1,
**caractérisé en ce que**
le modèle de référence (Ref1, Ref2) est déterminé lors d'au moins une rotation de référence de l'arbre (10) qui s'étend sur une rotation totale de l'arbre (10).

**3.** Procédé conforme à la revendication 1 ou 2,
**caractérisé en ce que**
le modèle de référence (Ref1, Ref2) est déterminé lors d'au moins une rotation de référence de l'arbre (10) lors de laquelle cet arbre (10) n'est pas chargé.

**4.** Procédé conforme à la revendication 1,
**caractérisé en ce que**
pour la comparaison du signal de sortie (Sig1, Sig2) avec le modèle de référence (Ref1, Ref2) on effectue une normalisation du signal de sortie (Sig1, Sig2) selon le modèle de référence (Ref1, Ref2) en fonction de la vitesse de rotation de l'arbre (10).

**5.** Procédé conforme à la revendication 4,
**caractérisé en ce que**
pour effectuer la normalisation on utilise un signal de vitesse de rotation (n).

**6.** Procédé conforme à la revendication 1,
**caractérisé en ce que**
pour la comparaison on choisit une valeur de pic du signal de sortie (Sig1m, Sig2m) contenue dans le modèle de référence (Ref1, Ref2).

**7.** Procédé conforme à la revendication 1,
**caractérisé en ce que**
pour la comparaison on prédéfinit une fenêtre de mesure (M1, M2) qui correspond à une plage d'angle de rotation prédéfinie.

**8.** Procédé conforme à la revendication 7,
**caractérisé en ce que**
la plage angulaire est de 10° à 90°.

**9.** Procédé conforme à la revendication 7 ou 8,
**caractérisé en ce que**
l'angle de rotation (w1, w2) de l'arbre (10) est détecté à partir d'une corrélation du modèle de référence (Ref1, Ref2) avec la partie du signal de sortie (Sig1, Sig2) située dans la fenêtre de référence (M1, M2).

**10.** Procédé conforme à la revendication 1,
**caractérisé en ce qu'**
on détermine une balourd de l'arbre (10) et le signal de sortie (Sig1, Sig2) est corrigé avant la comparaison.

**11.** Procédé conforme à la revendication 10,
**caractérisé en ce que**
la correction du balourd est effectuée en filtrant le signal de sortie (Sig1, Sig2) par un filtre passe-bas et le signal de sortie (Sig1TP, Sig2TP) filtré par le filtre passe-bas est soustrait du signal de sortie (Sig1, Sig2).

**12.** Dispositif de détection d'un angle de torsion (dw) d'un arbre (10) et/ou d'un couple de rotation (Md) s'exerçant sur cet arbre (10),
**caractérisé en ce qu'**
il est prévu deux capteurs inductifs (S1, S2) et un dispositif de traitement de signal (14), les capteurs et le dispositif de traitement de signal étant réalisés pour permettre la mise en oeuvre de la totalité des étapes du procédé conforme à l'une des revendications précédentes.

**13.** Dispositif conforme à la revendication 12,
**caractérisé en ce que**
le dispositif de traitement de signal (14) comprend une mémoire de référence (18a, 18b) pour recevoir les deux modèles de référence (Ref1, Ref2), un comparateur (24a, 24b) pour comparer les signaux de sortie (Sig1, Sig2) avec les modèles de référence (Ref1, Ref2), un dispositif de détermination de différence (26) pour déterminer l'angle de torsion (dw) de l'arbre (10) et un dispositif de conversion (28) pour déterminer le couple de rotation (Md) s'exerçant sur l'arbre (10).

**14.** Utilisation du dispositif conforme à l'une des revendications 12 et 13 pour des arbres (10) de transmissions.

**15.** Programme d'ordinateur permettant la mise en oeuvre du procédé pour détecter un angle de torsion (dw) d'un arbre (10) et/ou un couple de rotation (Md) s'exerçant sur cet arbre (10), ce programme d'ordinateur mettant en oeuvre toutes les étapes du procédé conforme à l'une des revendications 1 à 11, pour déterminer l'angle de rotation (w1, w2) de l'arbre (10) et/ou le couple de rotation (Md) s'exerçant sur cet arbre (10) lorsque le programme d'ordinateur se déroule dans le dispositif de traitement de signal (14).

10

S1

14

Sig1

12

w1

Fig.1

Sig1
[V]

0,02
0,01
0
-0,01
-0,02

0,005  0,01  0,015  0,02  0,025  0,03  0,035  0,04  0,045  0,05

t
[Zeit s]

Fig.2

Fig.3

Fig.4a

Fig.4b

Fig.5

Fig.6a

Fig.6b

Fig.7

Fig.8

Fig.9

Fig.10

Fig.11

S1

Sig1

30

Sig1'

34

Sig1u

Sig1TP

32

Fig.12

**IN DER BESCHREIBUNG AUFGEFÜHRTE DOKUMENTE**

**In der Beschreibung aufgeführte Patentdokumente**

- DE 19818799 C2
- DE 19932965 A1
- DE 60201226 T2
- DE 69732355 T2
- DE 102007023537 A1
- EP 1315954 B1